# FASCICULE DE BREVET EUROPEEN

(11) **EP 0 484 238 B1**
(45) Date de publication et mention de la délivrance du brevet: **02.04.1997**
(21) Numéro de dépôt: 91402908.7
(22) Date de dépôt: 30.10.1991
(51) Int. Cl.: C03B 23/035, C03B 23/03, C03B 35/20, C03B 35/24

(54) **Dispositif de bombage de feuilles de verre**
Vorrichtung zum Biegen von Glasscheiben
Apparatus for bending glass-sheets

(30) Priorité: 31.10.1990 DE 4034600
(43) Date de publication de la demande: 06.05.1992
(73) Titulaire: SAINT-GOBAIN VITRAGE, 92400 Courbevoie (FR); VEGLA Vereinigte Glaswerke GmbH, D-52066 Aachen (DE)
(72) Inventeur: Kuster, Hans-Werner, W-5100 Aachen (DE); Diederen, Werner, W-5120 Herzogenrath (DE); Kahlen, Werne, W-5120 Herzogenrath (DE)
(74) Mandataire: Menes, Catherine

(56) Documents cités:
- EP-A- 0 438 342
- FR-A- 1 559 723
- FR-A- 2 546 506

## Description

La présente invention concerne le bombage de feuilles de verre et s'applique notamment à la production industrielle des vitrages automobiles. Plus précisément, l'invention a trait aux dispositifs de bombage dans lesquels la feuille de verre est réchauffée à la température de bombage, convoyée en position horizontale, est arrêtée sous un élément supérieur de transfert dont la face de contact est tournée vers le bas, est soulevée et plaquée contre la face de contact de cet élément de transfert par des forces de nature pneumatique puis déposée sur un élément bas du type cadre annulaire.

De tels dispositifs de bombage sont utilisés pour la mise en oeuvre de différents procédés de bombage. Dans le cas du procédé connu, par exemple, des brevets EP-B-3 391 et EP-B-5 506, l'élément de transfert est en règle générale une plaque aspirante, plane ou d'un rayon de courbure plus grand que celui que l'on souhaite conférer à la feuille de verre, percée de très nombreux orifices de succion. La feuille de verre est aspirée par cette plaque, soulevée au-dessus du convoyeur puis laissée tomber sur un cadre annulaire de bombage où elle est déformée sous l'effet de son propre poids et de l'énergie cinétique due à sa chute.

Dans le cas des procédés de bombage connus des brevets FR-B-2 085 464 (ou son équivalent US-A-3 778 244) et FR-A-2 027 901 (ou son équivalent US-A-3 607 187), la feuille de verre est de même soulevée par aspiration au travers de l'élément de transfert ou à sa périphérie mais de plus cet élément de transfert joue un rôle d'élément de bombage, c'est-à-dire que sa surface de contact correspond pour l'essentiel à la forme à conférer à la feuille de verre de sorte que la feuille de verre est formée définitivement ou au moins préformée lorsqu'elle est plaquée contre cet élément. Dans ces procédés de bombage, la feuille de verre est ensuite déposée sur un cadre annulaire de forme complémentaire avec éventuellement une étape de pressage pour l'obtention de la forme définitive.

Par ailleurs, il est connu du brevet EP-B-169 770 (ou son équivalent US-A-4 682 997) un procédé de bombage selon lequel la feuille de verre est soulevée et plaquée contre l'élément de transfert par un courant gazeux chaud ascendant. Dans ce cas, l'élément de transfert est constitué par une forme de bombage métallique pleine, non perforée. Le bombage est obtenu par le pressage de la feuille de verre, contre l'élément de transfert en forme au moyen du courant gazeux chaud ascendant. Un élément bas du type cadre annulaire récupére la feuille de verre bombée.

Dans tous ces procédés, la feuille de verre est transférée de l'élément supérieur à un cadre annulaire qui la conduit à un poste de refroidissement du type trempe thermique, dans lequel les deux faces principales de la feuille de verre sont intensément refroidies par de l'air soufflé par des caissons de soufflage de trempe. Pendant ce transfert du poste de bombage au poste de trempe, la feuille de verre est encore à une température supérieure à sa température de déformation et, de ce fait, a tendance à se déformer sous son propre poids car seule la partie périphérique de la feuille de verre est soutenue par le cadre annulaire. Il n'est pas possible de la transférer sur un élément bas plein qui interdirait un refroidissement par trempe thermique et/ou entraînerait des risques élevés de marquage du verre. De ce fait, la partie centrale de la feuille de verre acquiert un bombage supplémentaire non désiré, le plus souvent qualifié de défaut de "double-bombage". Ce double-bombage est particulièrement important dans le cas du premier procédé de bombage cité où la feuille de verre est déformée par l'énergie cinétique accumulée lors de sa chute.

Pour diminuer la profondeur de cette déformation supplémentaire indésirée, il a été proposé, notamment dans le brevet EP-B-3 391 précité, de donner à l'élément supérieur une contre-courbure choisie de manière à compenser le double-bombage indésiré. Mais en pratique, l'intensité du double-bombage n'est pas rigoureusement constante et peut au contraire varier en fonction de paramètres tels que la température des feuilles de verre, le temps de séjour sur le cadre annulaire ou d'autres paramètres affectant le procédé. Des éléments supérieurs contre-courbés à base de matériaux céramiques ne permettent aucun réglage en cours de production. Par ailleurs, la sélection de la contre-courbure nécessaire se fait le plus souvent par voie de tatonnement ce qui demande plusieurs rectifications de la forme de l'élément supérieur et augmente sensiblement le coût de l'élément supérieur, voire exclut l'emploi de tels éléments supérieurs contre-courbés pour des questions de rentabilité.

L'invention a pour but un dispositif de bombage comportant un élément supérieur de transfert apte à conférer à la feuille de verre un contre-bombage compensant la déformation parasite du type double-bombage se produisant sur l'élément bas du type cadre annulaire menant les feuilles de verre vers le poste suivant, notamment vers le poste de refroidissement par trempe thermique.

A cet effet, l'invention propose un dispositif de bombage d'une feuille de verre réchauffée en position horizontale à la température de bombage, ledit dispositif comprenant un élément supérieur de transfert avec une surface de contact tournée vers le bas, contre laquelle la feuille de verre est maintenue par une force de nature pneumatique après avoir été soulevée, ladite surface de contact étant formée d'une toile en tissu ou tricot, tendue, à portée libre au moins dans la partie centrale de la surface en contact avec la feuille de verre, faite de fibres résistant à hautes températures.

A portée libre signifie qu'au moins dans la région où une contre-courbure doit être obtenue, la toile n'est pas supportée sur sa face arrière. La toile doit de plus pouvoir se détendre de manière élastique dans la mesure correspondant au contre-bombage souhaité. Ce contre-bombage est obtenu automatiquement du fait de la force d'aspiration, ou selon le cas de pression qui plaque la feuille de verre contre la toile. L'intensité de ce contre-bombage dépend du type de toile et de son élasticité, de sa tension, du niveau de dépression - ou de pression - de la taille et de la forme de la surface où la toile est effectivement à portée libre.

Dans une variante plus particulièrement préférée de l'invention, la tension de la toile, tissu ou tricot, peut être réglée par un tendeur ce qui permet en augmentant ou réduisant la tension, de modifier facilement le contre-bombage.

D'autres détails et caractéristiques avantageuses de l'invention ressortent de la description faite ci-après en référence aux dessins annexés qui représentent :
* **figure 1** : une première variante de réalisation d'un élément de transfert selon l'invention, vue de dessous,
* **figure 2** : une coupe selon le plan II-II de la figure 1,
* **figure 3** : une deuxième variante de réalisation d'un élément de transfert selon l'invention, vue de dessous,
* **figure 4** : une coupe selon le plan IV-IV de la figure 3,
* **figure 5** : une variante de réalisation comportant une tension réglable de la toile.

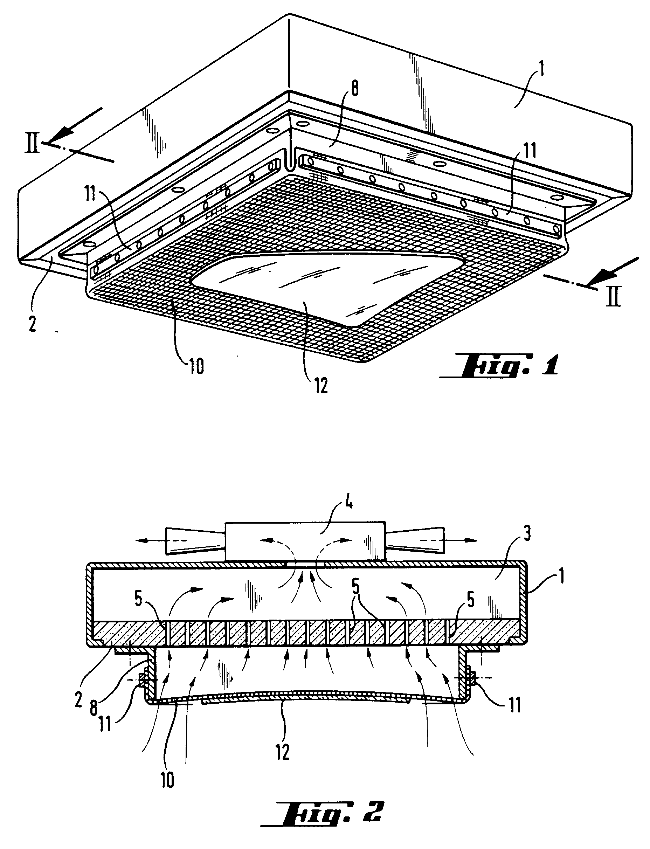

Comme on peut le voir de façon détaillée aux figures 1 et 2, le dispositif de transfert comprend un bâti métallique 1 et un fond 2. La chambre 3 à l'intérieur du bâti 1 peut être dépressurisée à l'aide de moyens d'aspiration 4. Le fond 2 est percé de rangées d'orifices 5 d'aspiration. Le bâti 1 est supporté par une fixation permettant des mouvements de montée-baisse du dispositif de transfert, tout en maintenant son horizontalité. La fixation et les moyens moteurs commandant les mouvements de montée-baisse ne sont pas représentés pour plus de clarté.

Le fond 2 est dans le cas ici exemplifié, constitué d'une plaque en céramique. A cet objet, on peut utiliser une plaque céramique d'un dispositif de bombage usuel qui sera reconfigurée selon l'invention par l'ajout de certains équipements. Ce fond 2 peut également être réalisé en métal, de préférence en acier résistant à haute température. Il est à noter que ce fond perforé n'est pas systématiquement nécessaire et que la chambre dépressurisée 3 peut être, le cas échéant, directement fermée par la toile tendue.

Sur le fond 2 est fixé un cadre 8 ayant un profil en L sur lequel la toile 10 en fibres métalliques est tendue et attachée à ce cadre par des barres métalliques 11. La taille du cadre 8 ou encore de la toile 10 est dans le cas ici représentée telle que la toile soit, dans toutes ses directions, plus grandes que les feuilles de verre 12 à transférer. De ce fait, les feuilles de verre traitées ont toute leur surface qui s'appuie sur la partie flexible de la toile 10.

La toile 10 est constituée d'un tissu de fibres en acier résistant à haute température. Des résultats satisfaisants ont été obtenus avec des fils de trames et de channes constitués tous deux de 2 à 4 fils élémentaires torsadés ensemble, chaque fil élémentaire étant pour sa part obtenu en torsadant de 60 à 120 fibres élémentaires d'un diamètre compris entre 5 et 20 micromètres. Le tissu à une compacité de 2 à 10 fils par centimètre. Il est suffisamment perméable à l'air pour ne pas gêner l'effet d'aspiration de la feuille de verre. De cette façon, toute la surface de la feuille de verre 12 est courbée dans la mesure correspondant à la déformation du tissu due à la surpression du côté bas du tissu 10.

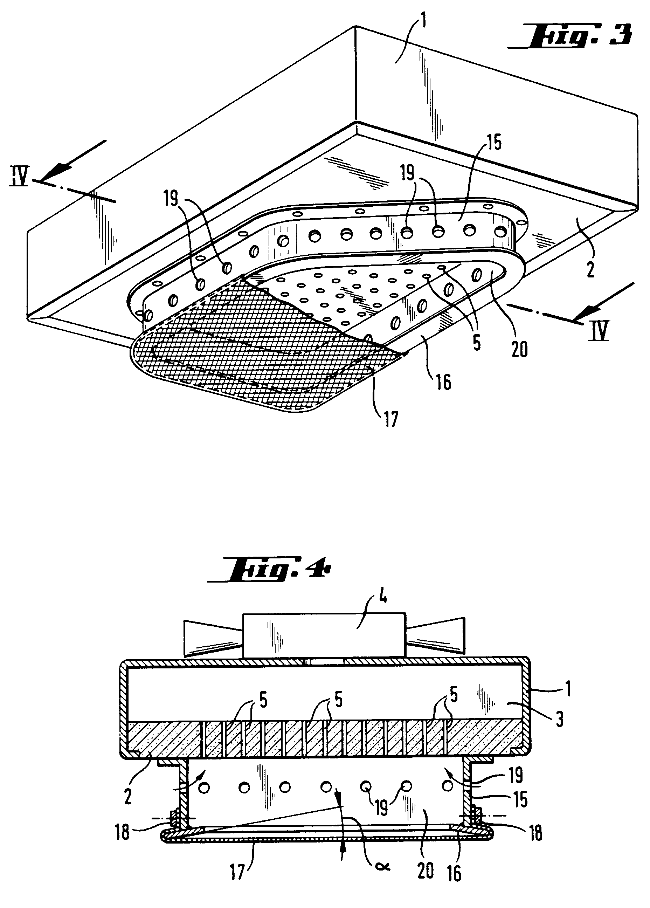

Un second mode de réalisation est illustré aux figures 3 et 4. Le dispositif de transfert comporte comme dans le cas précédent un bâti métallique 1, un fond 2, une chambre 3 et des moyens d'aspiration 4. Sous le fond 2 est fixée une forme de bombage 16, constituée par un cadre ouvert en son centre, dont la forme correspond à celle que l'on veut conférer à la feuille de verre. La forme de bombage est rattachée au fond 2 par un cadre espaceur 15. La face tournée vers le bas du cadre de bombage 16 a une largeur de quelques centimètres. Comme on peut le voir plus précisément figure 4, le cadre n'est pas horizontal mais présente une légère inclinaison, un angle alpha étant préservé entre la face inférieure et l'horizontale. Cet angle alpha correspond à peu près à l'angle formé par la toile 17 lorsqu'elle s'incurve.

La toile 17 se compose des mêmes fibres élémentaires et fils que dans l'exemple de réalisation donné plus haut. La toile est à nouveau fixée au cadre espaceur 15 par des barres 18. Le cadre espaceur 15 est muni d'une série de jours 19 ainsi, lorsque la feuille de verre est en contact avec la toile 17 tendue sur le cadre 16 et ferme ainsi la chambre 20 délimitée par le cadre espaceur 15, l'air chaud environnant peut être aspiré au travers de ces jours 19 par le dispositif d'aspiration 4. On évite ainsi des niveaux de dépression dans la chambre 20 qui seraient supérieurs à ceux nécessaires pour la contre-courbure souhaitée. Ainsi, le rayon de courbure de la toile peut être réglé en fonction de la tension de la toile 17, du niveau d'aspiration et de la dimension (ou du nombre) des jours 19.

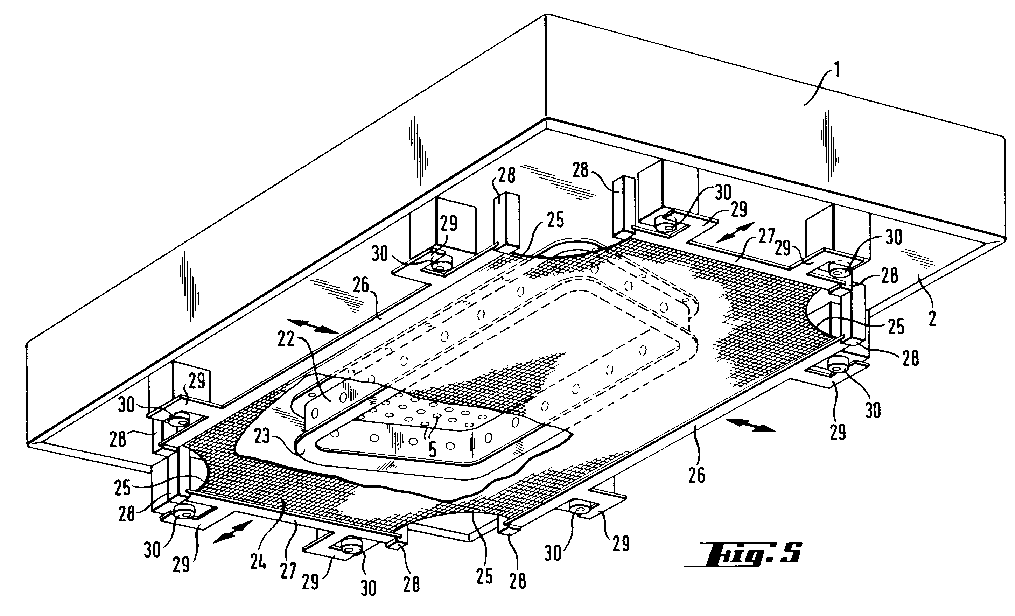

La figure 5 montre un exemple de réalisation d'un dispositif de transfert comportant cette fois un tendeur permettant de régler facilement la tension de la toile 25. Comme dans le cas précédent, le dispositif de transfert est constitué d'un bâti métallique 1, d'un fond 2 et d'un cadre 23 dont la forme correspond à celle que l'on veut conférer à la feuille de verre, ce cadre 23 étant rattaché au fond 2 par un cadre espaceur 22. La toile 24 est ici fixée sous le cadre 23, toile 24 et cadre 23 étant au contact l'un de l'autre. La toile 24, sensiblement de forme rectangulaire avec des échancrures 25 dans les quatre coins, est maintenue sur chaque côté par des barres métalliques 26 et 27. Chaque barre 26, 27 est fixée à ces deux extrémités par des appuis 28 rattachés au fond 2, la fixation laissant un degré de liberté de manière à pouvoir translater la barre perpendiculairement à sa longueur. Deux crochets 29 sont fixés à chaque barre 26, 27, du côté opposé à la toile 24. Ces crochets 29 sont en prise sur des corps cylindriques 30 montés en rotation autour d'axes excentrés, les axes de rotation étant fixés au fond 2. En faisant tourner les excentriques 30, on modifie ainsi la position des barres de maintien 26, 27 et par conséquence la tension de la toile. Dans l'exemple de réalisation montré à la figure 5, les 4 côtés de la toile sont rattachés à des barres dont la position peut être modifiée. Il est aussi possible de ne prévoir un tel réglage que sur deux côtés adjacents de la toile.

## Revendications

1. Dispositif de bombage d'une feuille de verre (12) réchauffée en position horizontale à la température de bombage, ledit dispositif comprenant un élément supérieur de transfert avec une surface de contact tournée vers le bas, contre laquelle la feuille de verre est maintenue par une force de nature pneumatique après avoir été soulevée, **caractérisé en ce que** ladite surface de contact est formée d'une toile en tissu ou tricot (10, 17, 24), tendue, à portée libre au moins dans la partie centrale de la surface en contact avec la feuille de verre, faite de fibres résistant à hautes températures.

2. Dispositif selon la revendication 1, **caractérisé en ce que** la toile (10, 17, 24) est composée de fibres en acier résistant à hautes températures.

3. Dispositif selon la revendication 1 ou 2, **caractérisé en ce que** la toile (10) est tendue sur un cadre (8) délimitant une surface plus grande que les feuilles de verre à traiter.

4. Dispositif selon la revendication 1 ou 2, **caractérisé en ce que** la toile (17, 24) est tendue sur un cadre (16, 23) dont la forme périphérique correspond au pourtour des feuilles de verre à traiter.

5. Dispositif selon la revendication 4, **caractérisé en ce que** le bord du cadre (16, 23) est fixé à un fond (2) par un cadre espaceur (15, 22).

6. Dispositif selon la revendication 5, **caractérisé en ce que** le cadre espaceur (15) est muni de jours (19).

7. Dispositif selon l'une des revendications 1 à 6, **caractérisé en ce que** la toile (24) est fixée au moyen d'un tendeur réglable.

8. Dispositif selon la revendication 7, **caractérisé en ce que** le tendeur comprend au moins une barre de maintien (26, 27), déplacable perpendiculairement à sa longueur, serrant la toile (24) d'un côté, maintenue par des crochets (29) accrochés à des corps cylindriques (30) montés en rotation autour d'axes excentrés et dont la rotation permet de modifier la tension.

## Claims

1. Device for bending a glass sheet (12) reheated in the horizontal position to the bending temperature, said device having an upper transfer element with a downwardly turned contact surface, against which the glass sheet is maintained by a pneumatic force after having been raised, characterized in that said contact surface is formed by a taut, woven or knitted cloth (10, 17, 24) having a free span at least in the central part of the surface in contact with the glass sheet and made from high temperature-resistant fibres.

2. Device according to claim 1, characterized in that the cloth (10, 17, 24) is made from high temperature-resistant steel fibres.

3. Device according to claim 1 or 2, characterized in that the cloth (10) is stretched on a frame (8) defining a surface larger than the glass sheets to be treated.

4. Device according to claim 1 or 2, characterized in that the cloth (17, 24) is stretched on a frame (16, 23), whose peripheral shape corresponds to the periphery of the glass sheets to be treated.

5. Device according to claim 4, characterized in that the edge of the frame (16, 23) is fixed to a base (2) by a spacing frame (15, 22).

6. Device according to claim 5, characterized in that the spacing frame (15) has openings (19).

7. Device according to one of the claims 1 to 6, characterized in that the cloth (24) is fixed by means of a regulatable stretcher.

8. Device according to claim 7, characterized in that the stretcher comprises at least one maintaining bar (26, 27), displaceable perpendicular to its length, securing the cloth (24) on one side, held by hooks (29) attached to cylindrical bodies (30) mounted so as to rotate about offcentred axes and whose rotation makes it possible to modify the tension.

## Patentansprüche

1. Vorrichtung zum Biegen einer in horizontaler Position auf Biegetemperatur erhitzten Glasscheibe (12), wobei die Vorrichtung ein oberes Übergabeteil mit einer nach unten gerichteten Kontaktfläche umfaßt, an welcher die Glasscheibe, nachdem sie angehoben worden ist, von einer pneumatischen Kraft gehalten wird, **dadurch gekennzeichnet, daß** die Kontaktfläche aus einem gespannten gewebten oder gestrickten Tuch (10, 17, 24) aus hochtemperaturbeständigen Fasern gebildet ist, das wenigstens im zentralen Teil der im Kontakt mit der Glasscheibe befindlichen Fläche eine freie Spannweite besitzt.

2. Vorrichtung nach Anspruch 1, **dadurch gekennzeichnet, daß** das Tuch (10, 17, 24) aus hochtemperaturbeständigen Stahlfasern besteht.

3. Vorrichtung nach Anspruch 1 oder 2, **dadurch gekennzeichnet**, **daß** das Tuch (10) über einen Rahmen (8) gespannt ist, der eine Fläche umschließt, welche größer als die zu behandelnden Glasscheiben ist.

4. Vorrichtung nach Anspruch 1 oder 2, **dadurch gekennzeichnet**, **daß** das Tuch (17, 24) über einen Rahmen (16, 23) gespannt ist, dessen Umfangsform dem Umfang der zu behandelnden Glasscheiben entspricht.

5. Vorrichtung nach Anspruch 4, **dadurch gekennzeichnet, daß** der Rand des Rahmens (16, 23) durch einen Zwischenrahmen (15, 22) an einem Boden (2) befestigt ist.

6. Vorrichtung nach Anspruch 5, **dadurch gekennzeichnet, daß** der Zwischenrahmen (15) mit Löchern (19) versehen ist.

7. Vorrichtung nach einem der Ansprüche 1 bis 6, **dadurch gekennzeichnet, daß** das Tuch (24) mittels einer verstellbaren Spanneinrichtung befestigt ist.

8. Vorrichtung nach Anspruch 7, **dadurch gekennzeichnet, daß** die Spanneinrichtung mindestens eine quer zur Längsausdehnung verschiebbare Halteleiste (26, 27) umfaßt, die das Tuch (24) auf einer Seite spannt und von Haken (29) gehalten wird, die an zylindrischen Körpern (30) befestigt sind, welche um exzentrische Achsen drehbar angebracht sind und deren Drehung es ermöglicht, die Spannung zu verändern.
